(19) Europäisches Patentamt
European Patent Office
Office européen des brevets

(11) **EP 3 633 832 A1**

(12) **EUROPEAN PATENT APPLICATION**
published in accordance with Art. 153(4) EPC

(43) Date of publication:
08.04.2020 Bulletin 2020/15

(51) Int Cl.:
*H02K 15/16* (2006.01)      *H02K 1/22* (2006.01)
*H02K 1/27* (2006.01)      *H02K 15/02* (2006.01)

(21) Application number: 18805909.1

(22) Date of filing: 15.03.2018

(86) International application number:
PCT/JP2018/010261

(87) International publication number:
WO 2018/216325 (29.11.2018 Gazette 2018/48)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 25.05.2017 JP 2017103579

(71) Applicant: Mitsui High-Tec, Inc.
Kitakyushu-shi, Fukuoka 807-8588 (JP)

(72) Inventor: YOSHIDA, Kohei
Kitakyushu-shi
Fukuoka 807-8588 (JP)

(74) Representative: Vossius & Partner
Patentanwälte Rechtsanwälte mbB
Siebertstrasse 3
81675 München (DE)

(54) **ROTOR CORE MANUFACTURING METHOD**

(57) The problem of the present disclosure is to provide a method of manufacturing a rotor core by which a rotor core excellent in weight balance can be produced efficiently. A method of manufacturing a rotor core includes: acquiring weights of a plurality of permanent magnets individually; obtaining first to $N^{th}$ (N is a natural number equal to or greater than 2) magnet sets by combining at least one relatively heavy permanent magnet and at least one relatively light permanent magnet of the permanent magnets into one magnet set, based on the acquired individual weights of the permanent magnets; preparing a core body configured to rotate around a predetermined rotational axis, the core body having first to $N^{th}$ attaching locations in a row in a circumferential direction of the rotational axis; and attaching the first to $N^{th}$ magnet sets to any of the first to $N^{th}$ attaching locations one by one.

*Fig.1*

## Description

## Technical Field

The present disclosure relates to a method of manufacturing a rotor core.

## Background Art

Patent Literature 1 discloses a rotor core for use in a surface permanent magnet (SPM) motor. The rotor core includes a core body and a plurality of permanent magnets attached to the outer peripheral surface of the core body.

Patent Literature 2 discloses a rotor core for use in an interior permanent magnet (IPM) motor. The rotor core includes a core body having a plurality of insertion holes extending in the rotational axis direction and a plurality of permanent magnets inserted in the insertion holes.

## Citation List

## Patent Literature

Patent Literature 1: Japanese Unexamined Patent Publication No. 2016-092994
Patent Literature 2: Japanese Unexamined Patent Publication No. 2013-009453

## Summary of Invention

## Technical Problem

Weights of permanent magnets may vary, for example, on the order of a few grams. If such permanent magnets that vary in weight are attached to a core body to form a rotor core, a deviation from weight balance (hereinafter referred to as "weight unbalance") occurs in the rotor core. When a motor constructed with a rotor core having such weight unbalance is driven, for example, abnormal vibration and noise may occur.

The present disclosure therefore provides a method of manufacturing a rotor core by which a rotor core excellent in weight balance can be produced efficiently.

## Solution to Problem

A method of manufacturing a rotor core according to an aspect of the present disclosure includes: acquiring weights of a plurality of permanent magnets individually; obtaining first to $N^{th}$ (N is a natural number equal to or greater than 2) magnet sets by combining at least one relatively heavy permanent magnet and at least one relatively light permanent magnet of the permanent magnets into one magnet set, based on the acquired individual weights of the permanent magnets; preparing a core body configured to rotate around a predetermined rotational axis, the core body having first to $N^{th}$ attaching locations in a row in a circumferential direction of the rotational axis; and attaching the first to $N^{th}$ magnet sets to any of the first to $N^{th}$ attaching locations one by one.

A method of manufacturing a rotor core according to another aspect of the present disclosure includes: acquiring weights of first to $L^{th}$ (L is a natural number equal to or greater than 5) permanent magnets individually; preparing a core body configured to rotate around a predetermined rotational axis, the core body having first to $L^{th}$ attaching locations in a row in a circumferential direction of the rotational axis; and when the acquired weights $m_1$, $m_2$, ...$m_{L-1}$, $m_L$ of the first to $L^{th}$ permanent magnets satisfy Expression 1, attaching the first to $L^{th}$ permanent magnets to the first to $L^{th}$ attaching locations one by one such that a $d^{th}$ (d is a natural number from 2 to L-1) permanent magnet of the first to $L^{th}$ permanent magnets is not adjacent to a $(d-1)^{th}$ permanent magnet of the first to $L^{th}$ permanent magnets and a $(d+1)^{th}$ permanent magnet of the first to $L^{th}$ permanent magnets in the circumferential direction of the rotational axis.

$$m_1 \geq m_2 \geq ...m_{L-1} \geq m_L \ ... \ (1)$$

A method of manufacturing a rotor core according to another aspect of the present disclosure includes: acquiring weights of first to $K^{th}$ (K is an even number equal to or greater than 4) permanent magnets individually; preparing a core body configured to rotate around a predetermined rotational axis, the core body having first to $K^{th}$ attaching locations in a row in a circumferential direction of the rotational axis; and when the acquired weights $m_1$, $m_2$, ...$m_{K-1}$, $m_K$ of the first to $K^{th}$ permanent magnets satisfy Expression 2, attaching the first to $K^{th}$ permanent magnets to the first to $K^{th}$ attaching locations one by one such that an $e^{th}$ (e is an odd number from 1 to K) permanent magnet of the first to $K^{th}$ permanent magnets and an $f^{th}$ (f is an even number that satisfies f = e + 1 and from 1 to K) permanent magnet of the first to $K^{th}$ permanent magnets face each other with the rotational axis interposed therebetween.

$$m_1 \geq m_2 \geq ...m_{K-1} \geq m_K ... (2)$$

A method of manufacturing a rotor core according to another aspect of the present disclosure includes: acquiring weights of first to $J^{th}$ (J is an even number equal to or greater than 6) permanent magnets individually; preparing a core body configured to rotate around a predetermined rotational axis, the core body having first to $J^{th}$ attaching locations in a row in a circumferential direction of the rotational axis; and when the acquired weights $m_1$, $m_2$, ...$m_{J-1}$, $m_J$ of the first to $J^{th}$ permanent magnets satisfy Expression 3, forming J/2 pairs each by selecting any two permanent magnets from among the first to $J^{th}$ permanent magnets, and attaching the first to $J^{th}$ permanent magnets to the first to $J^{th}$ attaching locations one by one such that relatively heavy permanent magnets of the pairs are not adjacent to each other in the circumferential direction of the rotational axis, relatively light permanent magnets of the pairs are not adjacent to each other in the circumferential direction of the rotational axis, and permanent magnets in each pair face each other with the rotational axis interposed therebetween.

$$m_1 \geq m_2 \geq ...m_{J-1} \geq m_J ... (3)$$

**Advantageous Effects of Invention**

With the method of manufacturing a rotor core according to the present disclosure, a rotor core excellent in weight balance can be produced efficiently.

**Brief Description of Drawings**

FIG. 1 is a perspective view illustrating an example of a stacked rotor core.
FIG. 2 is a cross-sectional view along line II-II in FIG. 1.
FIG. 3 is a top view illustrating an example of the stacked rotor core.
FIG. 4 is a schematic diagram illustrating combinations of magnetic insertion holes and magnet sets.
FIG. 5 is a schematic diagram illustrating combinations of magnetic insertion holes and magnet sets.
FIG. 6 is a schematic diagram illustrating an example of a manufacturing apparatus for the stacked rotor core.
FIG. 7 is a schematic diagram illustrating combinations of magnetic insertion holes and magnet sets.
FIG. 8 is a cross-sectional view of another example of the stacked rotor core cut in the same manner as in FIG. 2.
FIG. 9 is a perspective view illustrating another example of a stacked rotor core.

**Description of Embodiments**

An exemplary embodiment according to the present disclosure will be described in more detail below with reference to the drawings. In the following description, the same elements or elements having the same functions are denoted by the same reference signs and an overlapping description will be omitted.

Structure of Stacked Rotor Core

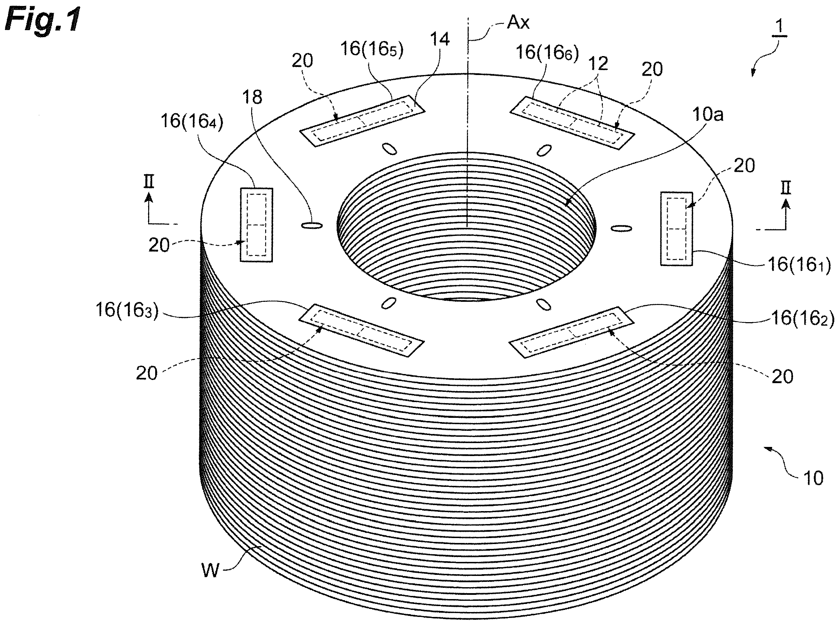

First of all, referring to FIG. 1 to FIG. 3, a structure of a stacked rotor core 1 (rotor core) is described. The stacked rotor core 1 is a part of a rotor. End plates and a shaft are attached to the stacked rotor core 1 to form a rotor. The rotor is combined with a stator to form a motor. The stacked rotor core 1 in the present embodiment is used in an interior permanent magnet (IPM) motor. As illustrated in FIG. 1, the stacked rotor core 1 includes a stack 10 (core body), a plurality of permanent magnets 12, and a plurality of resin materials 14.

As illustrated in FIG. 1, the stack 10 has a cylindrical shape. More specifically, an axial hole 10a passing through the stack 10 so as to extend along the center axis Ax is provided at the center portion of the stack 10. In other words, the axial hole 10a extends in the stacking direction of the stack 10 (which may be referred to as "height direction" of the stack 10). The stacking direction is also the extending direction of the center axis Ax. In the present embodiment, since the stack 10 rotates around the center axis Ax, the center axis Ax is the rotational axis. A shaft is inserted in the axial hole 10a.

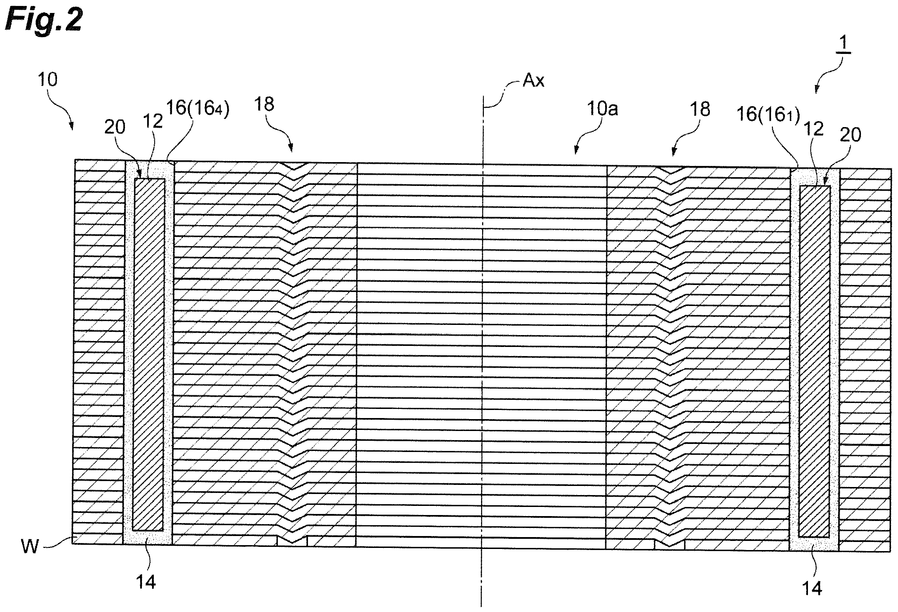

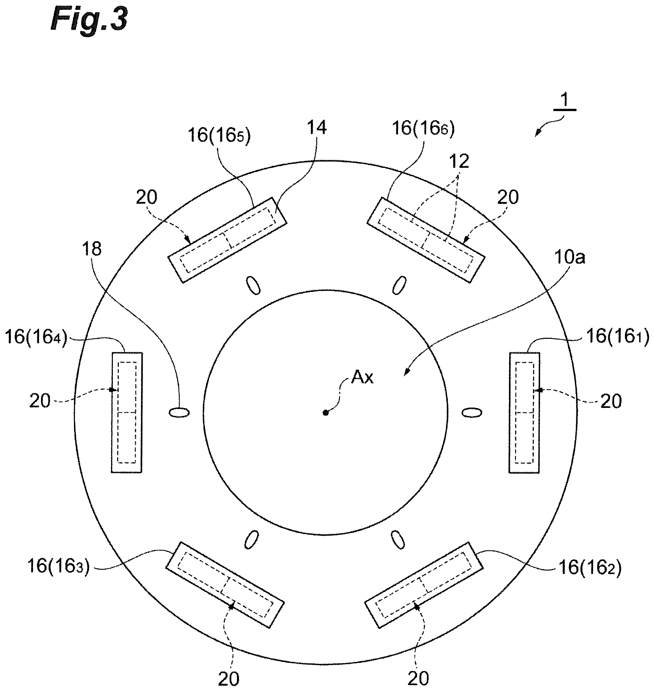

The stack 10 has a plurality of magnet insertion holes 16 (attaching locations). As illustrated in FIG. 1 and FIG. 3, the magnet insertion holes 16 are arranged at regular intervals along the outer peripheral edge of the stack 10. As illustrated in FIG. 2, the magnet insertion holes 16 each pass through the stack 10 so as to extend along the center axis Ax. That is, the magnet insertion hole 16 extends in the stacking direction.

In the present embodiment, the shape of the magnet insertion hole 16 is an elongated hole extending along the outer peripheral edge of the stack 10. There are six magnet insertion holes 16 in the present embodiment. These magnet insertion holes 16 may be hereinafter denoted as magnet insertion holes $16_1$ to $16_6$. The magnet insertion holes $16_1$ to $16_6$ are arranged in a row clockwise in this order as viewed from above. The position, the shape, and the number of magnet insertion holes 16 may be changed according to the application of the motor, the required performance, and the like.

The stack 10 is configured such that a plurality of blanked members W are stacked. The blanked member W is a plate-shaped part formed by blanking an electrical steel sheet ES described later into a predetermined shape and has a shape corresponding to the stack 10. The stack 10 may be configured by rotational stacking. "Rotational stacking" refers to stacking a plurality of blanked members W while shifting the angles of the blanked members W relative to each other. The rotational stacking is performed mainly for cancelling out the plate thickness deviations of the stack 10. The angle of the rotational stacking may be set to a desired value.

As illustrated in FIG. 1 to FIG. 3, the blanked members W adjacent in the stacking direction may be fastened to each other by connecting tab portions 18. These blanked members W may be fastened to each other by a variety of known methods instead of the connecting tab portions 18. For example, a plurality of blanked members W may be joined to each other by adhesive or resin material or joined to each other by welding. Alternatively, the blanked member W may be provided with a temporarily-connecting tab, and the stack 10 may be obtained by fastening a plurality of blanked members W to each other through the temporarily-connecting tabs and thereafter removing the temporarily-connecting tabs from the stack. The "temporarily-connecting tab" means a connecting tab used for temporarily integrating a plurality of blanked member W and removed in the process of producing a product (stacked rotor core 1).

As illustrated in FIG. 1 to FIG. 3, the permanent magnet 12 is inserted in the magnet insertion hole 16. Specifically, in the present embodiment, one magnet set 20 that is a combination of two permanent magnets 12 is inserted in one magnet insertion hole 16. In the present embodiment, 12 permanent magnets 12 are combined two by two to form six magnet sets $20_1$ to $20_6$, and one of the magnet sets $20_1$ to $20_6$ is inserted in the corresponding one of six magnet insertion holes $16_1$ to $16_6$. In each magnet insertion hole 16, two permanent magnets 12 are arranged adjacent to each other in the longitudinal direction of the magnet insertion hole 16 (the circumferential direction of the stack 10). In the present embodiment, the permanent magnet 12 has the shape of, but not limited to, a rectangular parallelepiped in the present embodiment. The kind of permanent magnets 12 is determined according to the application of the motor, the required performance, and the like and may be, for example, sintered magnets or bonded magnets. The weights of the permanent magnets 12 vary, for example, on the order of a few grams due to manufacturing error.

The magnet insertion hole 16 is filled with the resin material 14 after the permanent magnet 12 (magnet set 20) is inserted. The resin material 14 has the function of fixing the permanent magnet 12 (magnet set 20) in the magnet insertion hole 16. An example of the resin material 14 is a thermosetting resin. A specific example of the thermosetting resin is a resin composition including an epoxy resin, a cure initiator, and an additive. Examples of the additive include filler, fire retardant, and stress reducer. The resin material 14 also has the function of joining the blanked members W adjacent in the top-down direction together. A thermoplastic resin may be used as the resin material 14.

Detail of Magnet Set

The detail of the magnet set 20 will now be described. In the present embodiment, the magnet set 20 is configured not with a combination of arbitrary two permanent magnets 12 but with a combination of two permanent magnets 12 that satisfy a predetermined condition. Specifically, when the weights $m_1$ to $m_{12}$ of 12 permanent magnets $12_1$ to $12_{12}$ satisfy Expression 4, one of relatively heavy permanent magnets $12_1$ to $12_6$ and one of relatively light permanent magnets $12_7$ to $12_{12}$ may be combined into one magnet set 20 (Condition 1).

$$m_1 \geq m_2 \geq ... \geq m_{11} \geq m_{12} ... (4)$$

Alternatively, when the weights $m_1$ to $m_{12}$ of 12 permanent magnets $12_1$ to $12_{12}$ satisfy Expression 4, each of magnet sets $20_1$ to $20_6$ may be a combination as follows (Condition 2).

Magnet set $20_1$: combination of permanent magnet $12_1$ (weight $m_1$) and permanent magnet $12_{12}$ (weight $m_{12}$)
Magnet set $20_2$: combination of permanent magnet $12_2$ (weight $m_2$) and permanent magnet $12_{11}$ (weight $m_{11}$)
Magnet set $20_3$: combination of permanent magnet $12_3$ (weight $m_3$) and permanent magnet $12_{10}$ (weight $m_{10}$)
Magnet set $20_4$: combination of permanent magnet $12_4$ (weight $m_4$) and permanent magnet $12_9$ (weight $m_9$)
Magnet set $20_5$: combination of permanent magnet $12_5$ (weight $m_5$) and permanent magnet $12_8$ (weight $m_8$)
Magnet set $20_6$: combination of permanent magnet $12_6$ (weight $m_6$) and permanent magnet $12_7$ (weight $m_7$)

That is, magnet sets $20_1$ to $20_6$ may be obtained by repeating the procedure of combining one heaviest permanent magnet $12_1$ and one lightest permanent magnet $12_{12}$ of 12 permanent magnets $12_1$ to $12_{12}$ to obtain one magnet set $20_1$ and combining one heaviest permanent magnet $12_2$ and one lightest permanent magnet $12_{11}$ of the remaining 10 permanent magnets $12_2$ to $12_{11}$ to obtain one magnet set $20_2$.

When the weights $M_1$ to $M_6$ of magnet sets $20_1$ to $20_6$ satisfy Expression 5, these magnet sets $20_1$ to $20_6$ may be inserted one by one in any magnet insertion holes $16_1$ to $16_6$ (Condition 3).

$$M_1 \geq M_2 \geq M_3 \geq M_4 \geq M_5 \geq M_6 \ ... \ (5)$$

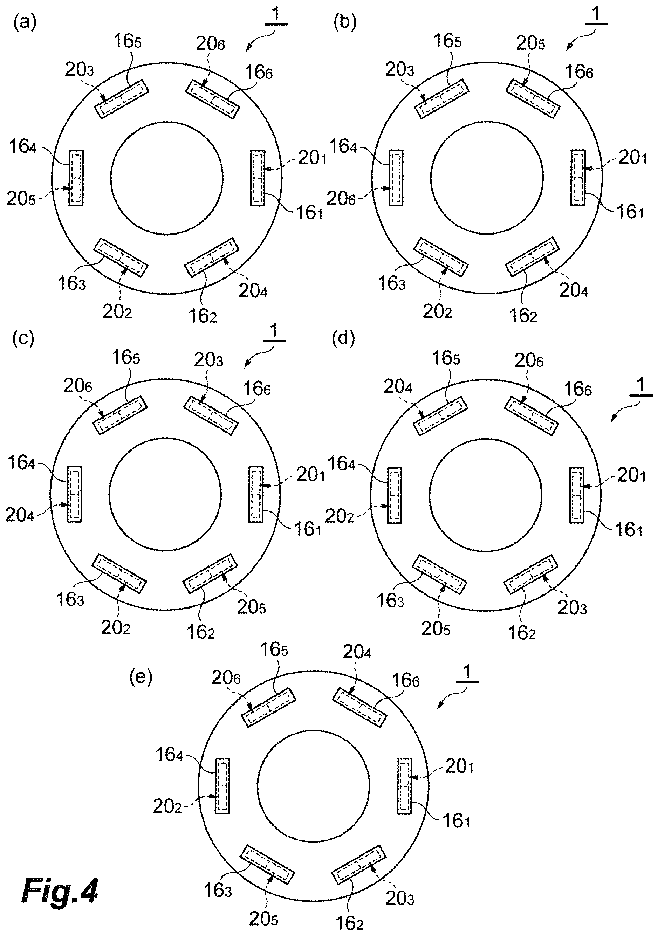

Alternatively, when the weights $M_1$ to $M_6$ of magnet sets $20_1$ to $20_6$ satisfy Expression 5, the magnet sets $20_1$ to $20_6$ may be inserted in the magnet insertion holes $16_1$ to $16_6$ one by one such that a magnet set $20_a$ (a is a natural number from 2 to 5) is not adjacent to a magnet set $20_{a-1}$ and a magnet set $20_{a+1}$ in the circumferential direction of the center axis Ax (Condition 4). As illustrated in FIG. 4 and Table 1, there are five combinations of six magnet insertion holes $16_1$ to $16_6$ and six magnet sets $20_1$ to $20_6$ that can satisfy Condition 4, excluding a combination that is the same when the stacked rotor core 1 is turned upside down.

[Table 1]

| Magnet insertion hole | | $16_1$ | $16_2$ | $16_3$ | $16_4$ | $16_5$ | $16_6$ |
|---|---|---|---|---|---|---|---|
| Combination of magnet sets | FIG. 4(a) | $20_1$ | $20_4$ | $20_2$ | $20_5$ | $20_3$ | $20_6$ |
| | FIG. 4(b) | $20_1$ | $20_4$ | $20_2$ | $20_6$ | $20_3$ | $20_5$ |
| | FIG. 4(c) | $20_1$ | $20_5$ | $20_2$ | $20_4$ | $20_6$ | $20_3$ |
| | FIG. 4(d) | $20_1$ | $20_3$ | $20_5$ | $20_2$ | $20_4$ | $20_6$ |
| | FIG. 4(e) | $20_1$ | $20_3$ | $20_5$ | $20_2$ | $20_6$ | $20_4$ |

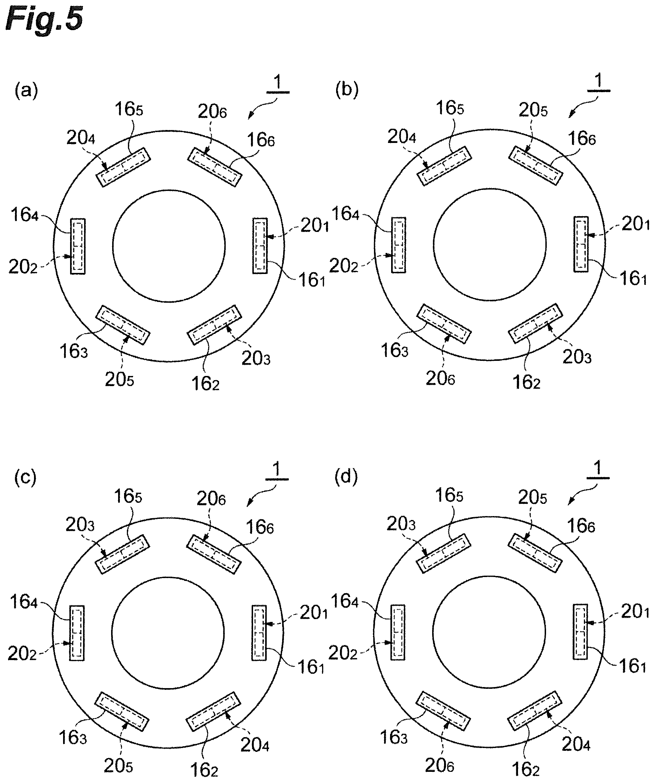

Alternatively, when the weights $M_1$ to $M_6$ of magnet sets $20_1$ to $20_6$ satisfy Expression 5, the magnet sets $20_1$ to $20_6$ may be inserted in the magnet insertion holes $16_1$ to $16_6$ one by one such that a magnet set $20_b$ (b is an odd number from 1 to 6) and a magnet set $20_c$ (c is an even number that satisfies c = b + 1 and from 1 to 6) face each other with the center axis Ax interposed therebetween (Condition 5). That is, the magnet set $20_b$ and the magnet set $20_c$ may form a pair so as to face each other with the center axis Ax interposed therebetween, and the weights $M_1$, $M_2$, ...$M_5$, $M_6$ of the magnet sets $20_1$ to $20_6$ may decrease in this order. The odd-numbered magnet set 20 of a pair of magnet sets 20 is heavier than the even-numbered magnet set 20 of the respective pair of magnet sets 20. As illustrated in FIG. 5 and Table 2, there are four combinations of six magnet insertion holes $16_1$ to $16_6$ and six magnet sets $20_1$ to $20_6$ that can satisfy Condition 5, excluding a combination that is the same when the stacked rotor core 1 is turned upside down.

[Table 2]

| Magnet insertion hole | | $16_1$ | $16_2$ | $16_3$ | $16_4$ | $16_5$ | $16_6$ |
|---|---|---|---|---|---|---|---|
| Combination of magnet sets | FIG. 5(a) | $20_1$ | $20_3$ | $20_5$ | $20_2$ | $20_4$ | $20_6$ |
| | FIG. 5(b) | $20_1$ | $20_3$ | $20_6$ | $20_2$ | $20_4$ | $20_5$ |
| | FIG. 5(c) | $20_1$ | $20_4$ | $20_5$ | $20_2$ | $20_3$ | $20_6$ |
| | FIG. 5(d) | $20_1$ | $20_4$ | $20_6$ | $20_2$ | $20_3$ | $20_5$ |

Alternatively, while Condition 5 is satisfied, odd-numbered magnet sets 20 of the magnet sets $20_1$ to $20_6$ are not necessarily adjacent to each other in the circumferential direction of the center axis Ax, and even-numbered magnet sets 20 of the magnet sets $20_1$ to $20_6$ are not necessarily adjacent to each other in the circumferential direction of the center axis Ax (Condition 6). As illustrated in FIG. 5(c) and Table 2, there is one combination of six magnet insertion holes $16_1$ to $16_6$ and six magnet sets $20_1$ to $20_6$ that can satisfy Condition 6, excluding a combination that is the same when the stacked rotor core 1 is turned upside down.

Alternatively, when the weights $M_1$ to $M_6$ of magnet sets $20_1$ to $20_6$ satisfy Expression 5, three pairs may be each formed by selecting any two magnet sets 20 from among the magnet sets $20_1$ to $20_6$, and the magnet sets $20_1$ to $20_6$ may be inserted in the magnet insertion holes $16_1$ to $16_6$ one by one such that relatively heavy magnet sets 20 of the pairs are not adjacent to each other in the circumferential direction of the center axis Ax, relatively light magnet sets 20 of the pairs are not adjacent to each other in the circumferential direction of the center axis Ax, and the magnet sets 20 in each pair face each other with the center axis Ax interposed therebetween (Condition 7). That is, relatively heavy magnet sets 20 of the pairs may be inserted in the magnet insertion holes $16_1$, $16_3$, and $16_5$, and relatively light magnet sets 20 of the pairs may be inserted in the magnet insertion holes $16_2$, $16_4$, and $16_6$. As illustrated below, there are 15 combinations when three pairs are each formed by selecting any two magnet sets 20 from the magnet sets $20_1$ to $20_6$. In the following, the pairs of magnet sets 20 are delimited by symbols "/".

1: magnet sets $20_1$, $20_2$/magnet sets $20_3$, $20_4$/magnet sets $20_5$, $20_6$
2: magnet sets $20_1$, $20_2$/magnet sets $20_3$, $20_5$/magnet sets $20_4$, $20_6$
3: magnet sets $20_1$, $20_2$/magnet sets $20_3$, $20_6$/magnet sets $20_4$, $20_5$
4: magnet sets $20_1$, $20_3$/magnet sets $20_2$, $20_4$/magnet sets $20_5$, $20_6$
5: magnet sets $20_1$, $20_3$/magnet sets $20_2$, $20_5$/magnet sets $20_4$, $20_6$
6: magnet sets $20_1$, $20_3$/magnet sets $20_2$, $20_6$/magnet sets $20_4$, $20_5$
7: magnet sets $20_1$, $20_4$/magnet sets $20_2$, $20_3$/magnet sets $20_5$, $20_6$
8: magnet sets $20_1$, $20_4$/magnet sets $20_2$, $20_5$/magnet sets $20_3$, $20_6$
9: magnet sets $20_1$, $20_4$/magnet sets $20_2$, $20_6$/magnet sets $20_3$, $20_5$
10: magnet sets $20_1$, $20_5$/magnet sets $20_2$, $20_3$/magnet sets $20_4$, $20_6$
11: magnet sets $20_1$, $20_5$/magnet sets $20_2$, $20_4$/magnet sets $20_3$, $20_6$
12: magnet sets $20_1$, $20_5$/magnet sets $20_2$, $20_6$/magnet sets $20_3$, $20_4$
13: magnet sets $20_1$, $20_6$/magnet sets $20_2$, $20_3$/magnet sets $20_4$, $20_5$
14: magnet sets $20_1$, $20_6$/magnet sets $20_2$, $20_4$/magnet sets $20_3$, $20_5$
15: magnet sets $20_1$, $20_6$/magnet sets $20_2$, $20_5$/magnet sets $20_3$, $20_4$

Then, as illustrated in Table 3, there are 15 combinations of six magnet insertion holes $16_1$ to $16_6$ and six magnet sets $20_1$ to $20_6$ that can satisfy Condition 7, excluding a combination that is the same when the stacked rotor core 1 is turned upside down.

[Table 3]

| Magnet insertion hole | | $16_1$ | $16_2$ | $16_3$ | $16_4$ | $16_5$ | $16_6$ |
|---|---|---|---|---|---|---|---|
| Combination of magnet sets | 1 | $20_1$ | $20_6$ | $20_3$ | $20_2$ | $20_5$ | $20_4$ |
| | 2 | $20_1$ | $20_6$ | $20_3$ | $20_2$ | $20_4$ | $20_5$ |
| | 3 | $20_1$ | $20_5$ | $20_3$ | $20_2$ | $20_4$ | $20_6$ |
| | 4 | $20_1$ | $20_6$ | $20_2$ | $20_3$ | $20_5$ | $20_4$ |
| | 5 | $20_1$ | $20_6$ | $20_2$ | $20_3$ | $20_4$ | $20_5$ |
| | 6 | $20_1$ | $20_5$ | $20_2$ | $20_3$ | $20_4$ | $20_6$ |
| | 7 | $20_1$ | $20_6$ | $20_2$ | $20_4$ | $20_5$ | $20_3$ |
| | 8 | $20_1$ | $20_6$ | $20_2$ | $20_4$ | $20_3$ | $20_5$ |
| | 9 | $20_1$ | $20_5$ | $20_2$ | $20_4$ | $20_3$ | $20_6$ |
| | 10 | $20_1$ | $20_6$ | $20_2$ | $20_5$ | $20_4$ | $20_3$ |
| | 11 | $20_1$ | $20_6$ | $20_2$ | $20_5$ | $20_3$ | $20_4$ |
| | 12 | $20_1$ | $20_4$ | $20_2$ | $20_5$ | $20_3$ | $20_6$ |
| | 13 | $20_1$ | $20_5$ | $20_2$ | $20_6$ | $20_4$ | $20_3$ |
| | 14 | $20_1$ | $20_5$ | $20_2$ | $20_6$ | $20_3$ | $20_4$ |
| | 15 | $20_1$ | $20_4$ | $20_2$ | $20_6$ | $20_3$ | $20_5$ |

Alternatively, while Condition 7 is satisfied, the magnet sets $20_1$ to $20_6$ may be inserted in the magnet insertion holes $16_1$ to $16_6$ one by one such that a magnet set $20_b$ and a magnet set $20_c$ face each other with the center axis Ax interposed therebetween (Condition 8). As illustrated in the first section of Table 3, there is one combinations of six magnet insertion holes $16_1$ to $16_6$ and six magnet sets $20_1$ to $20_6$ that can satisfy Condition 8, excluding a combination that is the same when the stacked rotor core 1 is turned upside down (this is the same as the stacked rotor core 1 illustrated in FIG. 5(c) turned upside down).

Manufacturing Apparatus for Stacked Rotor Core

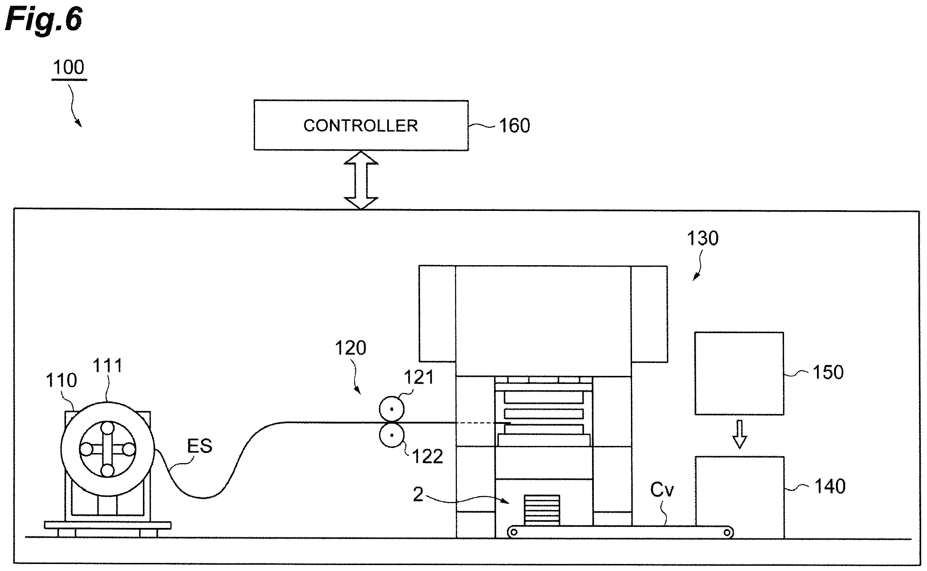

Referring now to FIG. 6, a manufacturing apparatus 100 for the stacked rotor core 1 is described.
The manufacturing apparatus 100 is an apparatus for manufacturing the stacked rotor core 1 from an electrical steel sheet ES (workpiece plate) which is a strip-like metal plate. The manufacturing apparatus 100 includes an uncoiler 110, a feeding device 120, a blanking device 130, a magnet attaching device 140, a magnet selecting device 150, and a controller 160 (control unit).
The uncoiler 110 rotatably holds a coil material 111 attached thereto. The coil material 111 is a strip-like electrical steel sheet ES wound into a coil shape. The feeding device 120 has a pair of rollers 121 and 122 sandwiching the electrical steel sheet ES from above and below. A pair of rollers 121 and 122 rotate and stop based on an instruction signal from the controller 160 and sequentially feed the electrical steel sheet ES toward the blanking device 130 intermittently.
The length of the electrical steel sheet ES that forms the coil material 111 may be, for example, about 500 m to 10000 m. The thickness of the electrical steel sheet ES may be, for example, about 0.1 mm to 0.5 mm. The thickness of the electrical steel sheet ES may be, for example, about 0.1 mm to 0.3 mm in terms of obtaining the stacked rotor core 1 having more excellent magnetic characteristics. The width of the electrical steel sheet ES may be, for example, about 50 mm to 500 mm.
The blanking device 130 operates based on an instruction signal from the controller 160. The blanking device 130 has the function of sequentially blanking the electrical steel sheet ES intermittently fed by the feeding device 120 to form a blanked member W and the function of sequentially stacking the blanked members W obtained by blanking to produce a stack 10.
The stack 10 is discharged from the blanking device 130 and then placed onto a conveyor Cv extending between the blanking device 130 and the magnet attaching device 140. The conveyor Cv operates based on an instruction from the controller 160 and feeds the stack 10 to the magnet attaching device 140. The stack 10 may be conveyed by anything other than the conveyor Cv between the blanking device 130 and the magnet attaching device 140. For example, the stack 10 may be placed in a container and conveyed manually.

The magnet attaching device 140 operates based on an instruction signal from the controller 160. The magnet attaching device 140 has the function of performing the operation of inserting the magnet sets $20_1$ to $20_6$ obtained in the magnet selecting device 150 into the magnet insertion holes $16_1$ to $16_6$ in accordance with any one of Conditions 3 to 8, and the function of performing the operation of charging the resin material 14 into the magnet insertion holes $16_1$ to $16_6$ in which the magnet sets $20_1$ to $20_6$ have been inserted.

The magnet selecting device 150 operates based on an instruction signal from the controller 160. The magnet selecting device 150 has a weight meter and a robot hand not illustrated. The magnet selecting device 150 has the function of placing the permanent magnets $12_1$ to $12_{12}$ on the weight meter one by one using the robot hand so that the controller 160 obtains the individual weights of the permanent magnets $12_1$ to $12_{12}$, the function of determining combinations of the permanent magnets $12_1$ to $12_{12}$ by the controller 160 based on the obtained weights of the permanent magnets $12_1$ to $12_{12}$ in accordance with Condition 1 or 2, and the function of combining the permanent magnets $12_1$ to $12_{12}$ two by two based on the determined combinations to form magnet sets $20_1$ to $20_6$ by the robot hand.

The controller 160, for example, generates an instruction signal for operating each of the feeding device 120, the blanking device 130, the magnet attaching device 140, and the magnet selecting device 150, based on a program stored in a recording medium (not illustrated) or an operation input from an operator, and transmits the instruction signal to each of the feeding device 120, the blanking device 130, the magnet attaching device 140, and the magnet selecting device 150.

Method of Manufacturing Stacked Rotor Core

A method of manufacturing the stacked rotor core 1 will now be described. First of all, a stack 10 is formed (third step). Specifically, the feeding device 120 feeds an electrical steel sheet ES to the blanking device 130 based on an instruction from the controller 160, and the blanking device 130 blanks a portion to be worked of the electrical steel sheet ES into a predetermined shape. A blanked member W is thus formed. This blanking process is repeated so that a predetermined number of blanked members W are stacked while being fastened to each other by connecting tab portions 18 to produce one stack 10.

Subsequently, the conveyor Cv conveys the stack 10 discharged from the blanking device 130 to the magnet attaching device 140, based on an instruction from the controller 160.

Before the stack 10 reaches the magnet attaching device 140, the magnet selecting device 150 performs operation based on an instruction from the controller 160. More specifically, the controller 160 controls the robot hand to place the permanent magnets $12_1$ to $12_{12}$ individually on a weight meter and receives data of the measured individual weights $m_1$ to $m_{12}$ of the permanent magnets $12_1$ to $12_{12}$ from the weight meter (first step). Subsequently, the controller 160 determines combinations of permanent magnets $12_1$ to $12_{12}$ in accordance with Condition 1 or 2, based on the acquired individual weights $m_1$ to $m_{12}$. Subsequently, the controller 160 controls the robot hand to combine the permanent magnets $12_1$ to $12_{12}$ two by two based on the determined combinations and thereby form magnet sets $20_1$ to $20_6$ (second step).

Here, the controller 160 may calculate the weights $M_1$ to $M_6$ of the magnet sets $20_1$ to $20_6$, based on data of the already measured individual weights $m_1$ to $m_{12}$ of the permanent magnets $12_1$ to $12_{12}$ (fifth step). Alternatively, the controller 160 may control the robot hand to place the magnet sets $20_1$ to $20_6$ individually on the weight meter and receive data of the measured individual weights $M_1$ to $M_6$ of the magnet sets $20_1$ to $20_6$ from the weight meter (fifth step). The controller 160 thereafter controls the robot hand to convey these magnet sets $20_1$ to $20_6$ to the magnet attaching device 140.

The controller 160 then controls the magnet attaching device 140 to insert the magnet sets $20_1$ to $20_6$ one by one into the magnet insertion holes $16_1$ to $16_6$ in accordance with any one of Conditions 3 to 8. The controller 160 then instructs the magnet attaching device 140 to charge and solidify the resin material 14 in the melted state in each magnet insertion hole 16. In this way, the solidified resin material 14 fixes each magnet set 20 in the corresponding magnet insertion hole 16 and integrates the blanked members W adjacent in the stacking direction. The stacked rotor core 1 is thus obtained.

The process is thereafter followed by a shaft attaching step of inserting a shaft into the axial hole 10a and fixing the shaft to the stacked rotor core 1, for example, with a key, and an end plate attaching step of arranging end plates to both end surfaces of the stacked rotor core 1. The end plates may be fixed to the end surfaces of the stacked rotor core 1, for example, by connecting tabs, welding, bonding, or resin sealing, or may be fixed to the stacked rotor core 1 by screwing a nut into the shaft, or may be fixed to the shaft, for example, by a key. A rotor including the stacked rotor core 1, the shaft, and the end plates is thus obtained.

Effects

In the present embodiment as described above, permanent magnets $12_1$ to $12_{12}$ are combined two by two in accordance with Condition 1 or 2 to form magnet sets $20_1$ to $20_6$. More specifically, in Condition 1, the magnet sets $20_1$ to $20_6$ are obtained by combining one relatively heavy permanent magnet 12 and one relatively light permanent magnet 12 of 12 permanent magnets $12_1$ to $12_{12}$ into one magnet set 20. With this configuration, the weights of the magnet sets $20_1$ to $20_6$ are equalized. Accordingly, with an extremely simple method of merely measuring the weight of each permanent magnet 12 to obtain a predetermined magnet set 20, the stacked rotor core 1 excellent in weight balance can be produced efficiently.

In Condition 2, the magnet sets $20_1$ to $20_6$ are obtained by repeatedly combining one heaviest permanent magnet 12 and one lightest permanent magnet 12 of 12 permanent magnets $12_1$ to $12_{12}$ into one magnet set 20. In this way, when two permanent magnets 12 are combined into one magnet set 20, the weights of the magnets set 20 are more equalized, so that the stacked rotor core 1 in even better weight balance can be obtained.

In the present embodiment, the magnet sets $20_1$ to $20_6$ are attached in the magnet insertion holes $16_1$ to $16_6$ one by one in accordance with any one of Conditions 3 to 8. More specifically, in Condition 3, the magnet sets $20_1$ to $20_6$ are inserted one by one in any magnet insertion holes $16_1$ to $16_6$.

In Condition 4, when the weights $M_1$ to $M_6$ of the magnet sets $20_1$ to $20_6$ satisfy Expression 5, the magnet sets $20_1$ to $20_6$ are inserted in the magnet insertion holes $16_1$ to $16_6$ one by one such that a magnet set $20_a$ (a is a natural number from 2 to 5) is not adjacent to the magnet set $20_{a-1}$ or the magnet set $20_{a+1}$ in the circumferential direction of the center axis Ax. In this case, relatively heavy magnet sets 20 are not adjacent to each other in the circumferential direction or relatively light magnet sets 20 are not adjacent to each other in the circumferential direction, so that the weight balance of the stacked rotor core 1 as a whole is enhanced. Accordingly, the stacked rotor core 1 in even better weight balance can be obtained.

In Condition 5, when the weights $M_1$ to $M_6$ of the magnet sets $20_1$ to $20_6$ satisfy Expression 5, the magnet sets $20_1$ to $20_6$ are inserted in the magnet insertion holes $16_1$ to $16_6$ one by one such that a magnet set $20_b$ (b is an odd number from 1 to 6) and a magnet set $20_c$ (c is an even number that satisfies c = b + 1 and from 1 to 6) face each other with the center axis Ax interposed therebetween. In this case, two magnet sets 20 having equivalent weights face each other with the center axis Ax interposed therebetween and therefore are attached to the magnet insertion holes 16 located farthest from each other. In this configuration, relatively heavy magnet sets 20 are less likely to gather in the circumferential direction or relatively light magnet sets 20 are less likely to gather in the circumferential direction, so that the weight balance of the stacked rotor core 1 is enhanced. Accordingly, the stacked rotor core 1 in even better weight balance can be obtained.

In Condition 7, when the weights $M_1$ to $M_6$ of the magnet sets $20_1$ to $20_6$ satisfy Expression 5, three pairs are each formed by selecting any two magnet sets 20 from among the magnet sets $20_1$ to $20_6$, and the magnet sets $20_1$ to $20_6$ are inserted in the magnet insertion holes $16_1$ to $16_6$ one by one such that relatively heavy magnet sets 20 of the pairs are not adjacent to each other in the circumferential direction of the center axis Ax, relatively light magnet sets 20 of the pairs are not adjacent to each other in the circumferential direction of the center axis Ax, and the magnet sets 20 in each pair face each other with the center axis Ax interposed therebetween. In this case, relatively heavy magnet sets 20 in pairs are not adjacent to each other in the circumferential direction of the center axis Ax or relatively light magnet sets 20 of the magnet sets 20 in pairs are not adjacent to each other in the circumferential direction of the center axis Ax, so that the weights of the magnet sets 20 are less likely to be unbalanced to one side in the circumferential direction. This configuration enhances the weight balance of the stacked rotor core 1. Accordingly, the stacked rotor core 1 in even better weight balance can be obtained.

In Condition 6, in addition to Condition 5, the odd-numbered magnet sets 20 of the magnet sets $20_1$ to $20_6$ are not adjacent to each other in the circumferential direction of the center axis Ax, and the even-numbered magnet sets 20 of the magnet sets $20_1$ to $20_6$ are not adjacent to each other in the circumferential direction of the center axis Ax. In Condition 8, in addition to Condition 7, the magnet set $20_b$ and the magnet set $20_c$ face each other with the center axis Ax interposed therebetween. In these cases, heavy permanent magnets 12 or light permanent magnets 12 are less likely to be unbalanced to one side in the circumferential direction of the center axis Ax, so that the weight balance of the stacked rotor core 1 as a whole is enhanced. Accordingly, the stacked rotor core 1 in even better weight balance can be obtained.

Modifications

Although an embodiment according to the present disclosure has been described in detail above, the foregoing embodiment is susceptible to various modifications within the scope and spirit of the claims.

(1) For example, in the foregoing embodiment, two permanent magnets 12 are combined to form one magnet set 20. However, one magnet set 20 may be configured with a combination of three or more permanent magnets 12.

(2) For example, when one magnet set 20 is configured with three permanent magnets 12, a plurality of magnet sets 20 may be obtained by repeatedly combining one relatively heavy permanent magnet 12, one relatively light permanent magnet 12, and any one permanent magnet 12 of a plurality of permanent magnets 12 into one magnet set 20. Alternatively, a plurality of magnet sets 20 may be obtained by repeatedly combining one heaviest permanent magnet 12, one lightest permanent magnet 12, and any one permanent magnet 12 of a plurality of permanent magnets 12 into one magnet set 20. In this case, the weights of the magnet sets 20 are more equalized, so that the stacked rotor core 1 in even better weight balance can be obtained. Even when one magnet set 20 is configured with five or more, odd number of permanent magnets 12, the permanent magnets 12 may be combined by a similar method as described above.

(3) Alternatively, a plurality of magnet sets 20 may be obtained by repeatedly combining one relatively heavy permanent magnet 12, one relatively light permanent magnet 12, and one permanent magnet 12 having a weight indicating a median value of a plurality of permanent magnets 12 into one magnet set 20. Alternatively, a plurality of magnet sets 20 may be obtained by repeatedly combining one heaviest permanent magnet 12, one lightest permanent magnet 12, and one permanent magnet 12 having a weight indicating a median value of a plurality of permanent magnets 12 into one magnet set 20. In this case, the weights of the magnet sets 20 are even more equalized, so that a rotor core in even better weight balance can be obtained. Even when one magnet set 20 is configured with five or more, odd number of permanent magnets 12, the permanent magnets 12 may be combined by a similar method as described above.

(4) When one magnet set 20 is configured with four permanent magnets 12, a plurality of magnet sets 20 may be obtained by repeatedly combining two relatively heavy permanent magnets 12 and two relatively light permanent magnets 12 of a plurality of permanent magnets 12 into one magnet set 20. Even when one magnet set 20 is configured with six or more, even-numbered permanent magnets 12, the permanent magnets 12 may be combined by a similar method as described above.

(5) In the foregoing embodiment, an example in which six magnet insertion holes 16 are formed in the stack 10 has mainly been described. However, a plurality of magnet insertion holes 16 may be formed in the stack 10. As will be described later, a plurality of magnet sets 20 may be formed in the stack 10 similarly when one permanent magnet 12 is inserted in one magnet insertion hole 16.

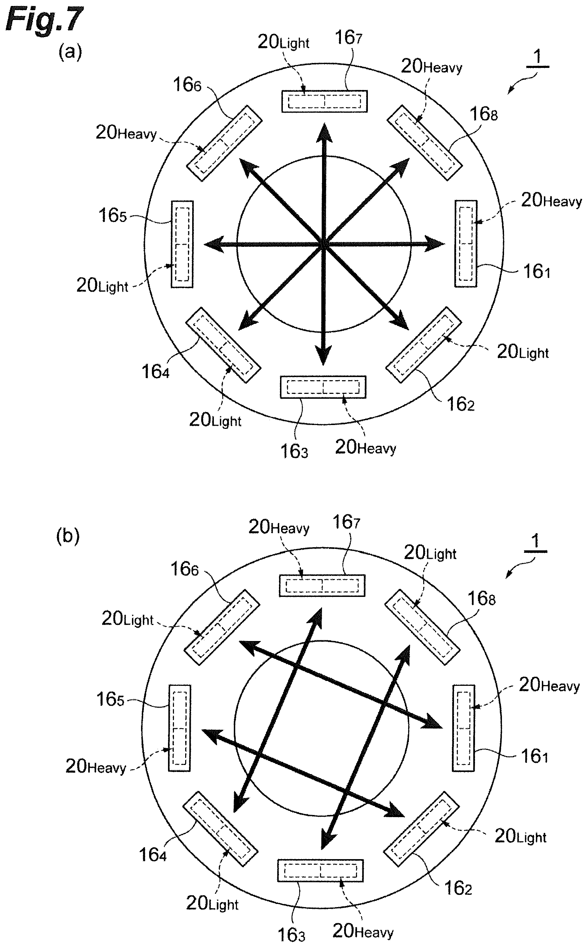

(6) The definition in the present description of a pair of magnet sets 20 "facing each other with the center axis Ax interposed therebetween" will now be described with reference to a stack 10 in which eight magnet insertion holes $16_1$ to $16_8$ are formed. More specifically, in the present description, a pair of magnet sets 20 "facing each other with the center axis Ax interposed therebetween" refers to not only that a pair of magnet sets 20 are arranged on a straight line passing through the center axis Ax as illustrated in FIG. 7(a) but also that a pair of magnet sets 20 are not necessarily arranged on a straight line passing through the center axis Ax but a pair of magnet sets 20 and the center axis Ax are arranged side by side linearly to some extent as illustrated in FIG. 7(b). Therefore, when a pair of a relatively heavy magnet set $20_{Heavy}$ and a relatively light magnet set $20_{Light}$ "face each other with the center axis Ax interposed therebetween" according to the former interpretation, as illustrated in FIG. 7(a), relatively heavy magnet sets $20_{Heavy}$ are adjacent to each other in the circumferential direction or relatively light magnet sets $20_{Light}$ are adjacent to each other in the circumferential direction. On the other hand, when a pair of a relatively heavy magnet set $20_{Heavy}$ and a relatively light magnet set $20_{Light}$ "face each other with the center axis Ax interposed therebetween" according to the latter interpretation, as illustrated in FIG. 7(b), a relatively heavy magnet set $20_{Heavy}$ and a relatively light magnet set $20_{Light}$ are alternately arranged in the circumferential direction (relatively heavy magnet sets $20_{Heavy}$ are not adjacent to each other in the circumferential direction or relatively light magnet sets $20_{Light}$ are not adjacent to each other in the circumferential direction).

(7) The permanent magnets 12 may be inserted in the magnet insertion holes 16 one by one without forming magnet sets 20 as in the foregoing embodiment. Specifically, the stacked rotor core 1 may be formed through the steps of: acquiring the weights $m_1$ to $m_6$ of six permanent magnets $12_1$ to $12_6$ individually in the magnet selecting device 150; and when the acquired weights $m_1$ to $m_6$ of six permanent magnets $12_1$ to $12_6$ satisfy Expression 6, inserting these six permanent magnets $12_1$ to $12_6$ into six magnet insertion holes $16_1$ to $16_6$ one by one by the magnet attaching device 140 such that the $d^{th}$ (d is a natural number from 2 to 5) permanent magnet $12_d$ is not adjacent to the $(d-1)^{th}$ permanent magnet $12_{d-1}$ and the $(d+1)^{th}$ permanent magnet $12_{d+1}$ in the circumferential direction of the center axis Ax (Condition 9).

$$m_1 \geq m_2 \geq ...m_5 \geq m_6 ... (6)$$

In this case, relatively heavy permanent magnets 12 are not adjacent to each other in the circumferential direction or relatively light permanent magnets 12 are not adjacent to each other in the circumferential direction. This configuration enhances the weight balance of the stacked rotor core 1 as a whole. Accordingly, with an extremely simple method of merely measuring the weight of each permanent magnet 12 and attaching the permanent magnet 12 to a predetermined magnet insertion hole 16, the stacked rotor core 1 excellent in weight balance can be produced efficiently.

(8) Similarly, in a case where the first to $L^{th}$ (L is a natural number equal to or greater than 5) permanent magnets 12 are present, when the weights $m_1$, $m_2$, $...m_{L-1}$, $m_L$ of the first to $L^{th}$ permanent magnets 12 satisfy Expression 7, the first to $L^{th}$ permanent magnets $12_1$ to $12_L$ may be inserted in the first to $L^{th}$ magnet insertion holes $16_1$ to $16_L$ one by one such that the $d^{th}$ (d is a natural number from 2 to L-1) permanent magnet 12 is not adjacent to the $(d-1)^{th}$ permanent magnet $12_{d-1}$ and the $(d+1)^{th}$ permanent magnet $12_{d+1}$ in the circumferential direction of the center axis Ax.

$$m_1 \geq m_2 \geq ...m_{L-1} \geq m_L \ ... \ (7)$$

(9) Alternatively, the stacked rotor core 1 may be formed through the steps of: acquiring the weights $m_1$ to $m_6$ of six permanent magnets $12_1$ to $12_6$ individually in the magnet selecting device 150; and when the acquired weights $m_1$ to $m_6$ of six permanent magnets $12_1$ to $12_6$ satisfy Expression 6, inserting these six permanent magnets $12_1$ to $12_6$ into six magnet insertion holes $16_1$ to $16_6$ one by one by the magnet attaching device 140 such that the $e^{th}$ (e is an odd number from 1 to 6) permanent magnet and the $f^{th}$ (f is an even number that satisfies f = e + 1 and from 1 to 6) permanent magnet face each other with the rotational axis interposed therebetween (Condition 10).

In this case, two permanent magnets 12 having equivalent weights face each other with the center axis Ax interposed therebetween and therefore are attached to the magnet insertion holes 16 located farthest from each other. In this configuration, relatively heavy permanent magnets 12 are less likely to gather in the circumferential direction or relatively light permanent magnets 12 are less likely to gather in the circumferential direction, so that the weight balance of the stacked rotor core 1 as a whole is enhanced. Accordingly, with an extremely simple method of merely measuring the weight of each permanent magnet 12 and attaching the permanent magnet 12 to a predetermined magnet insertion hole 16, the stacked rotor core 1 excellent in weight balance can be produced efficiently.

(10) Similarly, in a case where the first to $K^{th}$ (K is an even number equal to or greater than 4) permanent magnets 12 are present, when the weights $m_1$, $m_2$, $...m_{K-1}$, $m_K$ of the first to $K^{th}$ permanent magnets 12 satisfy Expression 8, the first to $K^{th}$ permanent magnets $12_1$ to $12_K$ may be inserted in the first to $K^{th}$ magnet insertion holes $16_1$ to $16_K$ one by one such that the $e^{th}$ (e is an odd number from 1 to K) permanent magnet $12_e$ and the $f^{th}$ (f is an even number that satisfies f = e + 1 and from 1 to K) permanent magnet $12_f$ face each other with the center axis Ax interposed therebetween. That is, the $e^{th}$ permanent magnet $12_e$ and the $f^{th}$ permanent magnet $12_f$ may form a pair so as to face each other with the center axis Ax interposed therebetween, and the weights $m_1$, $m_2$, $...m_{K-1}$, $m_K$ of the first to $K^{th}$ permanent magnets $12_1$ to $12_K$ may decrease in this order. In this configuration, the odd-numbered permanent magnet 12 of each pair of permanent magnets 12 is heavier than the even-numbered permanent magnet 12 of the respective pair of permanent magnets 12.

$$m_1 \geq m_2 \geq ...m_{K-1} \geq m_K \ ... \ (8)$$

In this case, odd-numbered permanent magnets 12 of the first to $K^{th}$ permanent magnets $12_1$ to $12_K$ are not necessarily adjacent to each other in the circumferential direction of the center axis Ax, and even-numbered permanent magnets 12 of the first to $K^{th}$ permanent magnets $12_1$ to $12_K$ are not necessarily adjacent to each other in the circumferential direction of the center axis Ax. With such a configuration, heavy permanent magnets 12 or light permanent magnets 12 are less likely to be unbalanced to one side in the circumferential direction of the center axis Ax, so that the weight balance of the stacked rotor core 1 as a whole is enhanced. Accordingly, the stacked rotor core 1 in even better weight balance can be obtained.

(11) Alternatively, the stacked rotor core 1 may be formed through the steps of: acquiring the weights $m_1$ to $m_6$ of six permanent magnets $12_1$ to $12_6$ individually in the magnet selecting device 150; when the acquired weights $m_1$ to $m_6$ of six permanent magnets $12_1$ to $12_6$ satisfy Expression 6, forming three pairs each by selecting any two permanent magnets 12 from among the permanent magnets $12_1$ to $12_6$, and inserting these six permanent magnets $12_1$ to $12_6$ into six magnet insertion holes $16_1$ to $16_6$ one by one by the magnet attaching device 140 such that relatively heavy permanent magnets 12 of the pairs are not adjacent to each other in the circumferential direction of the center axis Ax, relatively light permanent magnets 12 of the pairs are not adjacent to each other in the circumferential direction of the center axis Ax, and the permanent magnets 12 in each pair face each other with the center axis Ax interposed therebetween (Condition 11).

In this case, the weights of the permanent magnets 12 are less likely to be unbalanced to one side in the circumferential direction of the center axis Ax, so that the weight balance of the stacked rotor core 1 as a whole is enhanced. Accordingly, with an extremely simple method of merely measuring the weight of each permanent magnet 12 and attaching the permanent magnet 12 to a predetermined magnet insertion hole 16, the stacked rotor core 1 excellent in weight balance can be produced efficiently.

(12) Similarly, in a case where the first to $J^{th}$ (J is an even number equal to or greater than 6) permanent magnets 12 are present, when the weights $m_1$, $m_2$, ...$m_{J-1}$, $m_J$ of the first to $J^{th}$ permanent magnets 12 satisfy Expression 9, J/2 pairs may be each formed by selecting any two permanent magnets from among the first to $J^{th}$ permanent magnets, and the first to $J^{th}$ permanent magnets may be inserted into the first to $J^{th}$ magnet insertion holes $16_1$ to $16_J$ one by one such that relatively heavy permanent magnets of the pairs are not adjacent to each other in the circumferential direction of the rotational axis, relatively light permanent magnets of the pairs are not adjacent to each other in the circumferential direction of the rotational axis, and the permanent magnets in each pair face each other with the rotational axis interposed therebetween.

$$m_1 \geq m_2 \geq ...m_{J-1} \geq m_J ... (9)$$

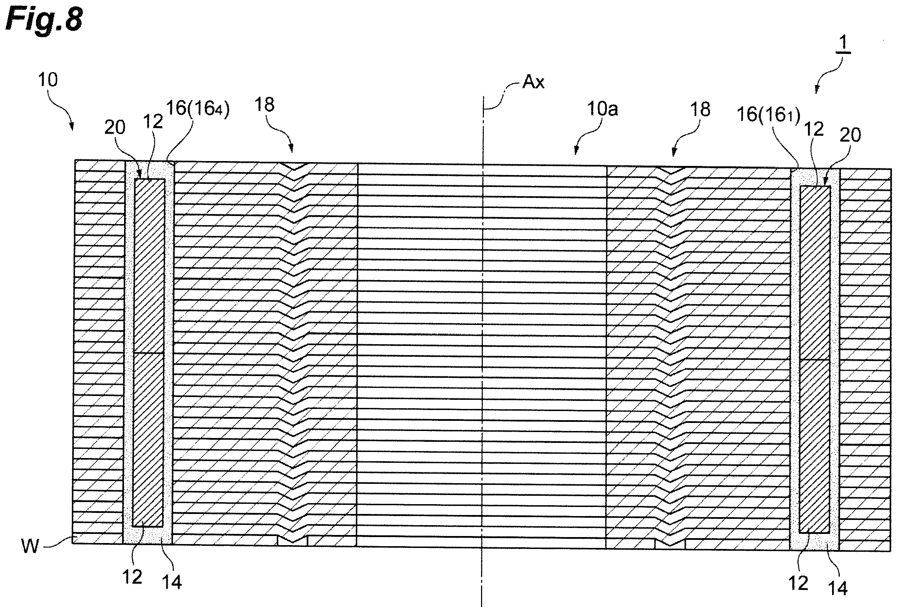

(13) As illustrated in FIG. 8, a plurality of permanent magnets 12 may be arranged in a row in one magnet insertion hole 16 so as to be adjacent to each other in its extending direction (stacking direction). Alternatively, in one magnet insertion hole 16, a plurality of permanent magnets 12 may be arranged in a row in the longitudinal direction of the magnet insertion hole 16 and a plurality of permanent magnets 12 may be arranged in a row in the extending direction of the magnet insertion hole 16 (stacking direction).

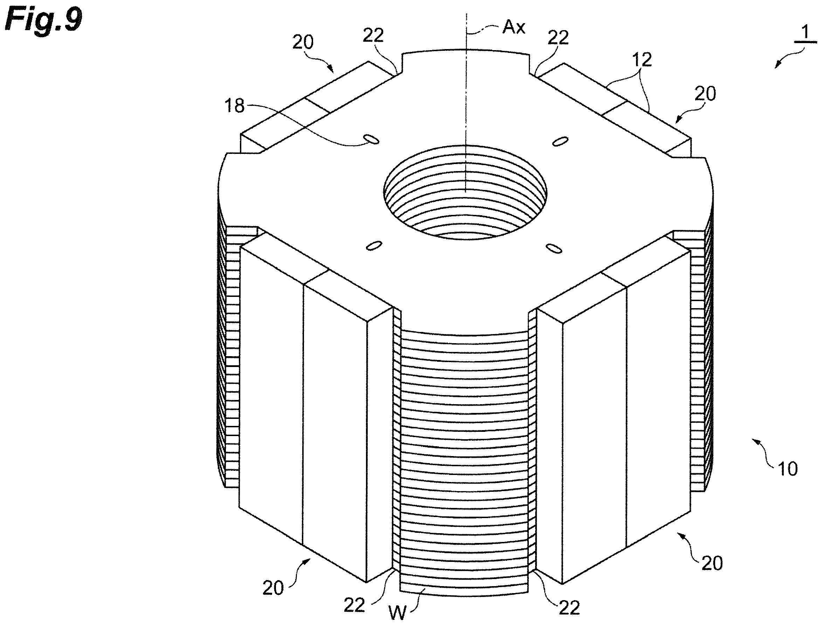

(14) As illustrated in FIG. 9, the scope and gist of the claims can be applied to the stacked rotor core 1 for use in a surface permanent magnet (SPM) motor. In this case, the outer peripheral surface of the stack 10 has depressed grooves 22 (attaching location) each extending in the center axis Ax direction, and one magnet set 20 is attached to each depressed groove 22.

15) In the foregoing embodiment, the stack 10 formed by stacking a plurality of blanked members W functions as a core body to which permanent magnets 12 are attached. However, the core body may be configured with anything other than the stack 10. Specifically, the core body may be, for example, a compact of ferromagnetic powder or may be formed by injection-molding a resin material containing ferromagnetic powder.

(16) The operation in the magnet attaching device 140 or the magnet selecting device 150 may be performed manually by a worker.

Examples

Example 1. A method of manufacturing a rotor core according to an example of the present disclosure includes: acquiring the weights of a plurality of permanent magnets individually; obtaining first to $N^{th}$ (N is a natural number equal to or greater than 2) magnet sets by combining at least one relatively heavy permanent magnet and at least one relatively light permanent magnet of the permanent magnets into one magnet set, based on the acquired individual weights of the permanent magnets; preparing a core body configured to rotate around a predetermined rotational axis, the core body having first to $N^{th}$ attaching locations arranged in a row in a circumferential direction of the rotational axis; and attaching the first to $N^{th}$ magnet sets to any of the first to $N^{th}$ attaching locations one by one.

In the method of manufacturing a rotor core according to Example 1, the first to $N^{th}$ (N is a natural number equal to or greater than 2) magnet sets are obtained by combining at least one relatively heavy permanent magnet and at least one relatively light permanent magnet of a plurality of permanent magnets into one magnet set. With this configuration, the weights of the magnet sets are equalized. Accordingly, with an extremely simple method of merely measuring the weight of each permanent magnet to obtain a predetermined magnet set, a rotor core excellent in weight balance can be produced efficiently.

Example 2. In the method according to Example 1, obtaining first to $N^{th}$ magnet sets may include repeatedly combining one heaviest permanent magnet and one lightest permanent magnet of the permanent magnets into one magnet set. In this way, when two permanent magnets are combined into one magnet set, the weights of the magnet sets are more equalized, so that a rotor core in even better weight balance can be obtained.

Example 3. In the method according to Example 1, obtaining first to $N^{th}$ magnet sets may include repeatedly combining one heaviest permanent magnet, one lightest permanent magnet, and any one permanent magnet of the permanent magnets into one magnet set. In this way, when three permanent magnets are combined into one magnet set, the weights of the magnet sets are more equalized, so that a rotor core in even better weight balance can be obtained.

Example 4. In the method according to Example 1, obtaining first to N<sup>th</sup> magnet sets may include repeatedly combining one heaviest permanent magnet, one lightest permanent magnet, and one permanent magnet having a weight indicating a median value of the permanent magnets into one magnet set. In this way, when three permanent magnets are combined into one magnet set, the weights of the magnet sets are even more equalized, so that a rotor core in even better weight balance can be obtained.

Example 5. The method according to any one of Example 1 to Example 4 may further include acquiring the weights of the first to N<sup>th</sup> magnet sets individually before attaching the first to N<sup>th</sup> magnet sets one by one. When the acquired weights $M_1, M_2, ...M_{N-1}, M_N$ of the first to N<sup>th</sup> magnet sets satisfy Expression 10, attaching the first to N<sup>th</sup> magnet sets one by one may include attaching the first to N<sup>th</sup> magnet sets to the first to N<sup>th</sup> attaching locations one by one such that the a<sup>th</sup> (a is a natural number from 2 to N-1) magnet set of the first to N<sup>th</sup> magnet sets is not adjacent to the (a-1)<sup>th</sup> magnet set of the first to N<sup>th</sup> magnet sets and the (a+1)<sup>th</sup> magnet set of the first to N<sup>th</sup> magnet sets in the circumferential direction of the rotational axis.

$$M_1 \geq M_2 \geq ...M_{N-1} \geq M_N ... (10)$$

In this case, relatively heavy magnet sets are not adjacent to each other in the circumferential direction or relatively light magnet sets are not adjacent to each other in the circumferential direction, so that the weight balance of the rotor core as a whole is enhanced. Accordingly, a rotor core in even better weight balance can be obtained.

Example 6. The method according to any one of Example 1 to Example 4 may further include acquiring the weights of the first to N<sup>th</sup> magnet sets individually before attaching the first to N<sup>th</sup> magnet sets one by one. When the acquired weights $M_1, M_2, ...M_{N-1}, M_N$ of the first to N<sup>th</sup> magnet sets satisfy Expression 11, attaching the first to N<sup>th</sup> magnet sets one by one may include attaching the first to N<sup>th</sup> magnet sets to the first to N<sup>th</sup> attaching locations one by one such that the b<sup>th</sup> (b is an odd number from 1 to N) magnet set of the first to N<sup>th</sup> magnet sets and the c<sup>th</sup> (c is an even number that satisfies c = b + 1 and from 1 to N) magnet set of the first to N<sup>th</sup> magnet sets face each other with the rotational axis interposed therebetween.

$$M_1 \geq M_2 \geq ...M_{N-1} \geq M_N ... (11)$$

In this case, two magnet sets having equivalent weights face each other with the rotational axis interposed therebetween and therefore are attached to the attaching locations located farthest from each other. In this configuration, relatively heavy magnet sets are less likely to gather in the circumferential direction or relatively light magnet sets are less likely to gather in the circumferential direction, so that the weight balance of the rotor core is enhanced. Accordingly, a rotor core in even better weight balance can be obtained.

Example 7. In the method according to Example 6, attaching the first to N<sup>th</sup> magnet sets one by one may include attaching the first to N<sup>th</sup> magnet sets to the first to N<sup>th</sup> attaching locations one by one such that odd-numbered magnet sets of the first to N<sup>th</sup> magnet sets are not adjacent to each other in the circumferential direction of the rotational axis and even-numbered magnet sets of the first to N<sup>th</sup> magnet sets are not adjacent to each other in the circumferential direction of the rotational axis. The b<sup>th</sup> magnet set and the c<sup>th</sup> magnet set form a pair so as to face each other with the rotational axis interposed therebetween, and the weights of the first to N<sup>th</sup> magnet sets decrease in this order according to Expression 10. In this configuration, the odd-numbered magnet set of a pair of magnet sets is heavier than the even-numbered magnet set of the pair of magnet sets. In this case, when the first to N<sup>th</sup> magnet sets are attached to the first to N<sup>th</sup> attaching locations one by one as in the method according to Example 7, heavy magnet sets are less likely to be unbalanced to one side in the circumferential direction of the rotational axis or light magnet sets are less likely to be unbalanced to one side in the circumferential direction of the rotational axis, so that the weight balance of the rotor core as a whole is enhanced. Accordingly, a rotor core in even better weight balance can be obtained.

Example 8. The method according to any one of Example 1 to Example 4 may further include acquiring the weights of the first to N<sup>th</sup> magnet sets individually before attaching the first to N<sup>th</sup> magnet sets one by one. Obtaining first to N<sup>th</sup> magnet sets may include obtaining first to N<sup>th</sup> (N is a natural number equal to or greater than 6) magnet sets by combining at least one relatively heavy permanent magnet and at least one relatively light permanent magnet of the permanent magnets into one magnet set. Attaching the first to N<sup>th</sup> magnet sets one by one may include, when the acquired weights $M_1, M_2, ...M_{N-1}, M_N$ of the first to N<sup>th</sup> magnet sets satisfy Expression 12, forming N/2 pairs each by selecting any two magnet sets from among the first to N<sup>th</sup> magnet sets, and attaching the first to N<sup>th</sup> magnet sets to the first to N<sup>th</sup> attaching locations one by one such that relatively heavy magnet sets of the pairs are not adjacent to each other in the circumferential direction of the rotational axis, relatively light magnet sets of the pairs are not adjacent to each other in the circumferential direction of the rotational axis, and the magnet sets in each pair face each other with the rotational axis interposed therebetween.

$$M_1 \geq M_2 \geq ...M_{N-1} \geq M_N \; ... \; (12)$$

In this case, relatively heavy magnet sets are not adjacent to each other in the circumferential direction of the rotational axis or relatively light magnet sets of the magnet sets in pairs are not adjacent to each other in the circumferential direction of the rotational axis, so that the weights of the magnet sets are less likely to be unbalanced to one side in the circumferential direction. This configuration enhances the weight balance of the rotor core as a whole. Accordingly, a rotor core in even better weight balance can be obtained.

Example 9. A method of manufacturing a rotor core according to another example of the present disclosure includes: acquiring the weights of first to $L^{th}$ (L is a natural number equal to or greater than 5) permanent magnets individually; preparing a core body configured to rotate around a predetermined rotational axis, the core body having first to $L^{th}$ attaching locations arranged in a row in a circumferential direction of the rotational axis; and when the acquired weights $m_1$, $m_2$, ...$m_{L-1}$, $m_L$ of the first to $L^{th}$ permanent magnets satisfy Expression 13, attaching the first to $L^{th}$ permanent magnets to the first to $L^{th}$ attaching locations one by one such that the $d^{th}$ (d is a natural number from 2 to L-1) permanent magnet of the first to $L^{th}$ permanent magnets is not adjacent to the $(d-1)^{th}$ permanent magnet of the first to $L^{th}$ permanent magnets and the $(d+1)^{th}$ permanent magnet of the first to $L^{th}$ permanent magnets in the circumferential direction of the rotational axis.

$$m_1 \geq m_2 \geq ...m_{L-1} \geq m_L \; ... \; (13)$$

In the method of manufacturing a rotor core according to Example 9, the permanent magnets are attached to the attaching locations one by one in accordance with the acquired individual weights of the permanent magnets. Specifically, relatively heavy permanent magnets are not adjacent to each other in the circumferential direction or relatively light permanent magnets are not adjacent to each other in the circumferential direction. This configuration enhances the weight balance of the rotor core as a whole. Accordingly, with an extremely simple method of merely measuring the weight of each permanent magnet and attaching the permanent magnet to a predetermined attachment part, a rotor core excellent in weight balance can be produced efficiently.

Example 10. A method of manufacturing a rotor core according to another example of the present disclosure includes: acquiring the weights of first to $K^{th}$ (K is an even number equal to or greater than 4) permanent magnets individually; preparing a core body configured to rotate around a predetermined rotational axis, the core body having first to $K^{th}$ attaching locations arranged in a row in a circumferential direction of the rotational axis; and when the acquired weights $m_1$, $m_2$, ...$m_{K-1}$, $m_K$ of the first to $K^{th}$ permanent magnets satisfy Expression 14, attaching the first to $K^{th}$ permanent magnets to the first to $K^{th}$ attaching locations one by one such that the $e^{th}$ (e is an odd number from 1 to K) permanent magnet of the first to $K^{th}$ permanent magnets and the $f^{th}$ (f is an even number that satisfies f = e + 1 and from 1 to K) permanent magnet of the first to $K^{th}$ permanent magnets face each other with the rotational axis interposed therebetween.

$$m_1 \geq m_2 \geq ...m_{K-1} \geq m_K \; ... \; (14)$$

In the method of manufacturing a rotor core according to Example 10, the permanent magnets are attached to the attaching locations one by one in accordance with the acquired individual weights of the permanent magnets. Specifically, two permanent magnets having equivalent weights face each other with the rotational axis interposed therebetween and therefore are attached to the attaching locations located farthest from each other. In this configuration, relatively heavy permanent magnets are less likely to gather in the circumferential direction or relatively light permanent magnets are less likely to gather in the circumferential direction, so that the weight balance of the rotor core as a whole is enhanced. Accordingly, with an extremely simple method of merely measuring the weight of each permanent magnet and attaching the permanent magnet to a predetermined attachment part, a rotor core excellent in weight balance can be produced efficiently.

Example 11. In the method according to Example 10, attaching the first to $K^{th}$ permanent magnets one by one may include attaching the first to $K^{th}$ permanent magnets to the first to $K^{th}$ attaching locations one by one such that odd-numbered permanent magnets of the first to $K^{th}$ permanent magnets are not adjacent to each other in the circumferential direction of the rotational axis and even-numbered permanent magnets of the first to $K^{th}$ permanent magnets are not adjacent to each other in the circumferential direction of the rotational axis. The $e^{th}$ permanent magnet and the $f^{th}$ permanent magnet form a pair so as to face each other with the rotational axis interposed therebetween, and the weights of the first to K<sup>th</sup> permanent magnets decrease in this order according to Expression 12. In this configuration, the odd-numbered permanent magnet of each pair of permanent magnets is heavier than the even-numbered permanent magnet of the respective pair of permanent magnets. In this case, when the first to K$^{th}$ permanent magnets are attached to the first to N$^{th}$ attaching locations one by one as in the method according to Example 11, heavy permanent magnets are less likely to be unbalanced to one side in the circumferential direction of the rotational axis or light permanent magnets are less likely to be unbalanced to one side in the circumferential direction of the rotational axis, so that the weight balance of the rotor core as a whole is enhanced. Accordingly, a rotor core in even better weight balance can be obtained.

Example 12. A method of manufacturing a rotor core according to another example of the present disclosure includes: acquiring the weights of first to J$^{th}$ (J is an even number equal to or greater than 6) permanent magnets individually; preparing a core body configured to rotate around a predetermined rotational axis, the core body having first to J$^{th}$ attaching locations arranged in a row in a circumferential direction of the rotational axis; and when the acquired weights $m_1$, $m_2$, ...$m_{J-1}$, $m_J$ of the first to J$^{th}$ permanent magnets satisfy Expression 15, forming J/2 pairs each by selecting any two permanent magnets from among the first to J$^{th}$ permanent magnets, and attaching the first to J$^{th}$ permanent magnets to the first to J$^{th}$ attaching locations one by one such that relatively heavy permanent magnets of the pairs are not adjacent to each other in the circumferential direction of the rotational axis, relatively light permanent magnets of the pairs are not adjacent to each other in the circumferential direction of the rotational axis, and the permanent magnets in each pair face each other with the rotational axis interposed therebetween.

$$m_1 \geq m_2 \geq ...m_{J-1} \geq m_J \ ... \ (15)$$

In the method of manufacturing a rotor core according to Example 12, the permanent magnets are attached to the attaching locations one by one in accordance with the acquired individual weights of the permanent magnets. Specifically, the permanent magnets are attached to the attaching locations one by one such that relatively heavy permanent magnets are not adjacent to each other in the circumferential direction of the rotational axis or relatively light permanent magnets of the pairs of magnet sets are not adjacent to each other in the circumferential direction of the rotational axis. With this configuration, the weights of permanent magnets are less likely to be unbalanced to one side in the circumferential direction, so that the weight balance of the rotor core as a whole is enhanced. Accordingly, with an extremely simple method of merely measuring the weight of each permanent magnet and attaching the permanent magnet to a predetermined attachment part, a rotor core excellent in weight balance can be produced efficiently.

Reference Signs List

| | |
|---|---|
| 1 | stacked rotor core (rotor core) |
| 10 | stack (core body) |
| 12 | permanent magnet |
| 14 | resin material |
| 16, $16_1$ to $16_6$ | magnet insertion hole (attachment part) |
| 20, $20_1$ to $20_6$ | magnet set |
| 22 | depressed groove (attachment part) |
| Ax | center axis (rotational axis) |

**Claims**

**1.**   A method of manufacturing a rotor core comprising:

acquiring weights of a plurality of permanent magnets individually;
obtaining first to N$^{th}$ (N is a natural number equal to or greater than 2) magnet sets by combining at least one relatively heavy permanent magnet and at least one relatively light permanent magnet of the permanent magnets into one magnet set, based on the weights of the permanent magnets acquired individually;
preparing a core body configured to rotate around a predetermined rotational axis, the core body comprising first to N$^{th}$ attaching locations arranged in a row in a circumferential direction of the rotational axis; and
attaching the first to N$^{th}$ magnet sets to any of the first to N$^{th}$ attaching locations one by one.

2. The method according to claim 1, wherein
obtaining the first to N$^{th}$ magnet sets includes repeatedly combining one heaviest permanent magnet and one lightest permanent magnet of the permanent magnets into one magnet set.

3. The method according to claim 1, wherein
obtaining the first to N$^{th}$ magnet sets includes repeatedly combining one heaviest permanent magnet, one lightest permanent magnet, and any one permanent magnet of the permanent magnets into one magnet set.

4. The method according to claim 1, wherein
obtaining the first to N$^{th}$ magnet sets includes repeatedly combining one heaviest permanent magnet, one lightest permanent magnet, and one permanent magnet having a weight indicating a median value of the permanent magnets into one magnet set.

5. The method according to any one of claims 1 to 4, further comprising
acquiring weights of the first to N$^{th}$ magnet sets individually before attaching the first to N$^{th}$ magnet sets one by one, wherein
when the acquired weights $M_1$, $M_2$, ...$M_{N-1}$, $M_N$ of the first to N$^{th}$ magnet sets satisfy Expression 1, attaching the first to N$^{th}$ magnet sets one by one includes attaching the first to N$^{th}$ magnet sets to the first to N$^{th}$ attaching locations one by one such that a$^{th}$ (a is a natural number from 2 to N-1) magnet set of the first to N$^{th}$ magnet sets is not adjacent to (a-1)$^{th}$ magnet set of the first to N$^{th}$ magnet sets and (a+1)$^{th}$ magnet set of the first to N$^{th}$ magnet sets in the circumferential direction of the rotational axis.

$$M_1 \geq M_2 \geq ...M_{N-1} \geq M_N ... (1)$$

6. The method according to any one of claims 1 to 4, further comprising:

acquiring weights of the first to N$^{th}$ magnet sets individually before attaching the first to N$^{th}$ magnet sets one by one, wherein
when the acquired weights $m_1$, $M_2$, ...$M_{N-1}$, $M_N$ of the first to N$^{th}$ magnet sets satisfy Expression 2, attaching the first to N$^{th}$ magnet sets one by one may include attaching the first to N$^{th}$ magnet sets to the first to N$^{th}$ attaching locations one by one such that b$^{th}$ (b is an odd number from 1 to N) magnet set of the first to N$^{th}$ magnet sets and c$^{th}$ (c is an even number that satisfies c = b + 1 and from 1 to N) magnet set of the first to N$^{th}$ magnet sets face each other with the rotational axis interposed therebetween.

$$M_1 \geq M_2 \geq ...M_{N-1} \geq M_N ... (2)$$

7. The method according to claim 6, wherein
attaching the first to N$^{th}$ magnet sets one by one includes attaching the first to N$^{th}$ magnet sets to the first to N$^{th}$ attaching locations one by one such that odd-numbered magnet sets of the first to N$^{th}$ magnet sets are not adjacent to each other in the circumferential direction of the rotational axis and even-numbered magnet sets of the first to N$^{th}$ magnet sets are not adjacent to each other in the circumferential direction of the rotational axis.

8. The method according to any one of claims 1 to 4, further comprising:

acquiring weights of the first to N$^{th}$ magnet sets individually before attaching the first to N$^{th}$ magnet sets one by one, wherein
obtaining the first to N$^{th}$ magnet sets includes obtaining the first to N$^{th}$ (N is a natural number equal to or greater than 6) magnet sets by combining at least one relatively heavy permanent magnet and at least one relatively light permanent magnet of the permanent magnets into one magnet set, and
attaching the first to N$^{th}$ magnet sets one by one includes, when the acquired weights $M_1$, $M_2$, ...$M_{N-1}$, $M_N$ of the first to N$^{th}$ magnet sets satisfy Expression 3, forming N/2 pairs each by selecting any two magnet sets from among the first to N$^{th}$ magnet sets, and attaching the first to N$^{th}$ magnet sets to the first to N$^{th}$ attaching locations one by one such that relatively heavy magnet sets of the pairs are not adjacent to each other in the circumferential direction of the rotational axis, relatively light magnet sets of the pairs are not adjacent to each other in the circumferential direction of the rotational axis, and the magnet sets in each pair face each other with the rotational axis interposed therebetween.

$$M_1 \geq M_2 \geq ...M_{N-1} \geq M_N ... (3)$$

9. A method of manufacturing a rotor core comprising:

acquiring weights of first to $L^{th}$ (L is a natural number equal to or greater than 5) permanent magnets individually;
preparing a core body configured to rotate around a predetermined rotational axis, the core body comprising first to $L^{th}$ attaching locations arranged in a circumferential direction of the rotational axis; and
when the acquired weights $m_1$, $m_2$, ...$m_{L-1}$, $m_L$ of the first to $L^{th}$ permanent magnets satisfy Expression 4, attaching the first to $L^{th}$ permanent magnets to the first to $L^{th}$ attaching locations one by one such that a $d^{th}$ (d is a natural number from 2 to L-1) permanent magnet of the first to $L^{th}$ permanent magnets is not adjacent to a $(d-1)^{th}$ permanent magnet of the first to $L^{th}$ permanent magnets and a $(d+1)^{th}$ permanent magnet of the first to $L^{th}$ permanent magnets in the circumferential direction of the rotational axis.

$$m_1 \geq m_2 \geq ...m_{L-1} \geq m_L ... (4)$$

10. A method of manufacturing a rotor core comprising:

acquiring weights of first to $K^{th}$ (K is an even number equal to or greater than 4) permanent magnets individually;
preparing a core body configured to rotate around a predetermined rotational axis, the core body comprising first to $K^{th}$ attaching locations arranged in a circumferential direction of the rotational axis; and
when the acquired weights $m_1$, $m_2$, ...$m_{K-1}$, $m_K$ of the first to $K^{th}$ permanent magnets satisfy Expression 5, attaching the first to $K^{th}$ permanent magnets to the first to $K^{th}$ attaching locations one by one such that an $e^{th}$ (e is an odd number from 1 to K) permanent magnet of the first to $K^{th}$ permanent magnets and a $f^{th}$ (f is an even number that satisfies f = e + 1 and from 1 to K) permanent magnet of the first to $K^{th}$ permanent magnets face each other with the rotational axis interposed therebetween.

$$m_1 \geq m_2 \geq ...m_{K-1} \geq m_K ... (5)$$

11. The method according to claim 10, wherein
attaching the first to $K^{th}$ permanent magnets one by one includes attaching the first to $K^{th}$ permanent magnets to the first to $K^{th}$ attaching locations one by one such that odd-numbered permanent magnets of the first to $K^{th}$ permanent magnets are not adjacent to each other in the circumferential direction of the rotational axis and even-numbered permanent magnets of the first to $K^{th}$ permanent magnets are not adjacent to each other in the circumferential direction of the rotational axis.

12. A method of manufacturing a rotor core comprising:

acquiring weights of first to $J^{th}$ (J is an even number equal to or greater than 6) permanent magnets individually;
preparing a core body configured to rotate around a predetermined rotational axis, the core body comprising first to $J^{th}$ attaching locations arranged in a circumferential direction of the rotational axis; and
when the acquired weights $m_1$, $m_2$, ...$m_{J-1}$, $m_J$ of the first to $J^{th}$ permanent magnets satisfy Expression 6, forming J/2 pairs each by selecting any two permanent magnets from among the first to $J^{th}$ permanent magnets, and attaching the first to $J^{th}$ permanent magnets to the first to $J^{th}$ attaching locations one by one such that relatively heavy permanent magnets of the pairs are not adjacent to each other in the circumferential direction of the rotational axis, relatively light permanent magnets of the pairs are not adjacent to each other in the circumferential direction of the rotational axis, and the permanent magnets in each pair face each other with the rotational axis interposed therebetween.

$$m_1 \geq m_2 \geq ...m_{J-1} \geq m_J ... (6)$$

*Fig.1*

EP 3 633 832 A1

Fig.2

Fig.3

Fig.4

*Fig.5*

(a)

$16_5$ $20_6$ $1$
$20_4$ $16_6$
$16_4$ $20_1$
$20_2$ $16_1$
$16_3$ $20_3$
$20_5$ $16_2$

(b)

$16_5$ $20_5$ $1$
$20_4$ $16_6$
$16_4$ $20_1$
$20_2$ $16_1$
$16_3$ $20_3$
$20_6$ $16_2$

(c)

$16_5$ $20_6$ $1$
$20_3$ $16_6$
$16_4$ $20_1$
$20_2$ $16_1$
$16_3$ $20_4$
$20_5$ $16_2$

(d)

$16_5$ $20_5$ $1$
$20_3$ $16_6$
$16_4$ $20_1$
$20_2$ $16_1$
$16_3$ $20_4$
$20_6$ $16_2$

Fig.6

EP 3 633 832 A1

*Fig.7*

(a)

(b)

EP 3 633 832 A1

**Fig.8**

*Fig.9*

EP 3 633 832 A1

## INTERNATIONAL SEARCH REPORT

| International application No. |
| --- |
| PCT/JP2018/010261 |

A. CLASSIFICATION OF SUBJECT MATTER

Int.Cl. H02K15/16(2006.01)i, H02K1/22(2006.01)i, H02K1/27(2006.01)i, H02K15/02(2006.01)i

According to International Patent Classification (IPC) or to both national classification and IPC

B. FIELDS SEARCHED

Minimum documentation searched (classification system followed by classification symbols)
Int.Cl. H02K15/16, H02K1/22, H02K1/27, H02K15/02

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | JP 9-294358 A (HONDA MOTOR CO., LTD.) 11 November 1997, claim 2, paragraphs [0007], [0010]-[0025], fig. 1-4 (Family: none) | 1<br>2-12 |
| X<br>A | JP 2016-19381 A (MITSUI HIGH-TEC, INC.) 01 February 2016, paragraphs [0019]-[0041], fig. 1-7 & US 2016/0013709 A1, paragraphs [0034]-[0088], fig. 1-7 & CN 105281457 A | 1<br>2-12 |
| A | JP 2007-124819 A (ASMO CO., LTD.) 17 May 2007, paragraphs [0021]-[0025], fig. 1-2 (Family: none) | 1-12 |
| A | Microfilm of the specification and drawings annexed to the request of Japanese Utility Model Application No. 131778/1982 (Laid-open No. 50569/1984)(IIDA ELECTRICAL WORKS CO., LTD.) 03 April 1984, pp. 4-6, fig. 1-3 (Family: none) | 1-12 |
| A | JP 2012-100499 A (TOYOTA MOTOR CORP.) 24 May 2012, paragraphs [0019]-[0034], fig. 1-10 (Family: none) | 1-12 |

☐ Further documents are listed in the continuation of Box C.    ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 28 May 2018 (28.05.2018) | 05 June 2018 (05.06.2018) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016092994 A
- JP 2013009453 A